# EUROPÄISCHE PATENTSCHRIFT

(11) **EP 1 058 618 B1**
(45) Veröffentlichungstag und Bekanntmachung des Hinweises auf die Patenterteilung: **04.02.2004**
(21) Anmeldenummer: 99904680.8
(22) Anmeldetag: 01.03.1999
(51) Int. Cl.: B32B 5/24, B32B 5/26, B60R 13/08, G10K 11/168, D04H 1/56

(54) **SCHALLABSORBIERENDES DÜNNSCHICHTLAMINAT**
SOUND ABSORBENT THIN-LAYER LAMINATE
STRATIFIE EN COUCHES MINCES A ABSORPTION PHONIQUE

(30) Priorität: 03.03.1998 CH 50198; 12.11.1998 CH 227098
(43) Veröffentlichungstag der Anmeldung: 13.12.2000
(73) Patentinhaber: RIETER AUTOMOTIVE (INTERNATIONAL) AG, 8702 Zollikon (CH)
(72) Erfinder: VANBEMMEL, William, Ray, Lake County, IN 46307 (US); VULPITTA, Anthony, C., Lake County, IN 46307 (US); ALTS, Thorsten, D-64401 Gross-Bieberau (DE)
(74) Vertreter: Felber, Josef
(86) Internationale Anmeldenummer: PCT/CH1999/000094
(87) Internationale Veröffentlichungsnummer: WO 1999/044817

(56) Entgegenhaltungen:
- EP-A- 0 206 061
- EP-A- 0 334 178
- EP-A- 0 648 602
- EP-A- 0 732 684
- WO-A-97/00989
- WO-A-98/18656
- WO-A-98/18657
- GB-A- 2 235 651
- US-A- 5 298 694
- US-A- 5 773 375

## Beschreibung

Die vorliegende Erfindung betrifft ein schallabsorbierendes Dünnschichtlaminat gemäss Oberbegriff des Anspruchs 1, mit mindestens einer offenporigen Trägerschicht aus Schaum oder Faservlies und einer offenporigen Faserschicht, sowie ein Verfahren zur Herstellung desselben.

Schallabsorbierende Dünnschichtlaminate finden ihre Verwendung im wesentlichen in der Automobilindustrie, welche in zunehmendem Masse die Herstellung von leichten, kcstengünstigen und geräuscharmen Fahrzeugen anstrebt. Dies macht den Einsatz von billigen, dünnen und leichten Bauteilen erforderlich, welche gleichzeitig gute schallabsorbierende Eigenschaften aufweisen.

So sind heute bspw. aus der WO-A-98/18656 ultraleichte schallisolierende Fahrzeugverkleidungen bekannt, welche im vergleich zu klassischen Schallisolationspaketen und bei gleichbleibender akustischer Wirksamkeit, ein um über 50% geringeres Gewicht aufweisen. Diese Schallisolationspakete umfassen im wesentlichen eine offenporige Schaumschicht, auf welcher eine mikroporöse Versteifungsschicht aufgebracht ist. Bei diesen Bauteilen weist die aus Thermoformschaum oder PU-Schaum gefertigte Schaumschicht eine Dicke von 10 bis 25 mm und die aus einem thermoplastischen Mischfaservlies gefertigte Versteifungsschicht eine Dicke von 1.3 bis 2.5 mm auf.

In der US-5,298,594 werden dünne Faservlieslaminate für die Verkleidung von Fahrzeugtüren beschrieben. Diese Laminate umfassen ein mindestens 5 mm dickes Faservlies aus thermoplastischen Fasern, welches mit einem dünnen Gewebe, einem Vlies, einem Film oder einer Folie laminiert ist. Das mindestens 5 mm dicke Faservlies besteht aus einem Gemisch von schmelzgeblasenen Mikrofasern (melt-blown microfibers) und gebausehten Kräuselfasarn (crimped bulking fibers). Wegen des relativ grossen Durchmessers der Mikrofasern (bis zu 15 µm) und der Tatsache, dass der Luftströmungswiderstand in den einzelnen Schichten nicht geregelt oder vorgegeben ist, sind die schallabsorbierenden Eigenschaften dieser Materialien nicht optimiert und berücksichtigen diese Materialien die Schallabsorption insbesondere für die tieferen Frequenzen nicht.

Wegen des relativ grossen Durchmessers der verwendeten Fasern (5-15 µm) haben diese Faservlieslaminate im wesentlichen eine Trägerfunktion und zeichnen sich durch ihre mechanischen Eigenschaften aus, wobei deren schallabscrbierende Wirksamkeit eher durchschnittlich ist.

Es ist Aufgabe der vorliegenden Erfindung, in einfacher und kostengünstiger weise ein akustisch hochwirksames und ultraleichtes Dünnschichtlaminat zu schaffen. Insbesondere soll ein Laminat geschaffen werden, welches in den tieferen Frequenzen hervorragende schallabsorbierende Eigenschaften (bei vergleichbarer Dicke) sowie gleichzeitig eine gewisse strukturelle stabilität aufweist.

Diese Aufgabe wird erfindungsgemäss durch ein schallabsorbierendes Dünnschichtlaminat mit den Merkmalen des Anspruchs 1 gelöst und insbesondere durch ein Dünnschichtlaminat aus zwei unterschiedlichen Materialien. Das erfindungsgemässe Laminat umfasst eine dünne Schicht aus Mikrofasern, welche an eine Trägerschicht aus einem offenporigen Faservlies mit geringer Dichte gebunden ist. In einer bevorzugten Ausführungsform bestehen die Mikrofasern aus schmelzgeblasenem Polypropylen und weisen einen Faserdurchmesser von ca. 2-5 µm auf. Es versteht sich, dass diese Mikrofasern auch aus einem anderen Polyolefin, Polyester, Polyurethan oder Nylon erzeugt sein können. Die Mikrofaserschicht erreicht eine Dicke von lediglich 0.2 bis 1.0 mm, und insbesondere von 0.3 bis 0.7 mm und hat ein Flächengewicht von 20 bis 200 g/m², und insbesondere von 30 bis 100 g/m². Die erfindungsgemäss Verwendete Trägerschicht weist ein Flächengewicht von weniger als 2000 g/m² auf, eine Dicke von bis zu 50 mm und kann Baumwollfasern, synthetischen Fasern oder einem anderen Pasergemisch gefertigt sein. Besteht die Trägerschicht aus einem offenporigen Schaum, weist diese erfindungsgemäss eine geringe Dichte von 1 bis 2 lb/ft³ (16 bis 32 kg/m³) auf und kann aus Polyurethan oder einem anderen geschäumten Kunststoff gefertigt sein. Dabei ist die Mikrofaserschicht auf die Faservlies- oder Schaumschicht einfacherweise aufgeklebt.

Es zeigt sich, dass durch die erfindungsgemässe Beschichtung eines offenporigen, "low density" Schaums respektive einer offenporigen, schwachverdichteten Faservliesschicht mit einer äusserst dünnen Lage aus Mikrofasern ein Bauteil entsteht, welches einen überraschend hohen Absorptionskoeffizienten aufweist. Dies führt zu hochwirksam schallabsorbierenden Dünnschichtbauteilen mit geringem Flächengewicht. Darüberhinaus erweist sich die Mikrofaserschicht als wasserabstossend und ermöglicht damit die Verwendung der erfindungsgemässen Dünnschichtlaminate auch in feuchter oder nasser Umgebung.

Unter Dünnschichtlaminat sollen im folgenden Laminate verstanden werden, welche eine 0.2 bis 1.0 mm, insbesondere eine 0.3 bis 0.7 mm dünne Mikrofaserschicht aufweisen.

Die schwachverdichtete Fasarvliesträgerschicht umfasst vorteilhalfterweise Fasern, die mit thermoplastischen Fasern oder duroplastischen Harzen gebunden sind, um bei der Herstellung von schallabsorbierenden Fahrzeugteilen, insbesondere Teppichen oder Armaturenverkleidungen, mit Hilfe von Druck- und Wärmebehandlung in vorgegebene Konturen geformt werden zu können.

In Weiterbildungen des erfindungsgemässen Dünnschichtlaminats kann über die Schicht aus Mikrofasern eine dritte Schicht aus Faservlies angebracht werden. Diese dritte Faservliesschicht kann die Schallabsorptionsfähigkeit des Dünnschichtlaminats weiter verbessern und schützt die äusserst dünne Mikrofaserschicht gleichzeitig vor einer allfälligen Abrasion.

Weitere bevorzugte Ausführungsformen des erfindungsgemässen Dünnschichtlaminats sind aus den Unteransprüchen ersichtlich.

Das erfindungsgemässe Dünnschichtlaminat findet seine Anwendung bevorzugt im Automobilbau, und insbesondere überall dort wo dünne, hochwirksam schallabsorbierende Bauteile mit geringem Gewicht erforderlich sind.

Im folgenden soll die vorliegende Erfindung anhand eines Ausführungsbeispiels und mit Hilfe der Figuren näher erläutert werden. Dabei zeigt:
- Fig. 1: ein Diagramm mit Vergleichsmessungen der Schallabsorptionskoeffizienten verschiedener Dünnschichtlaminate,
- Fig. 2: eine schematische Darstellung des Verfahrens zur Herstellung erfindungsgemässer Dünnschichtlaminate.

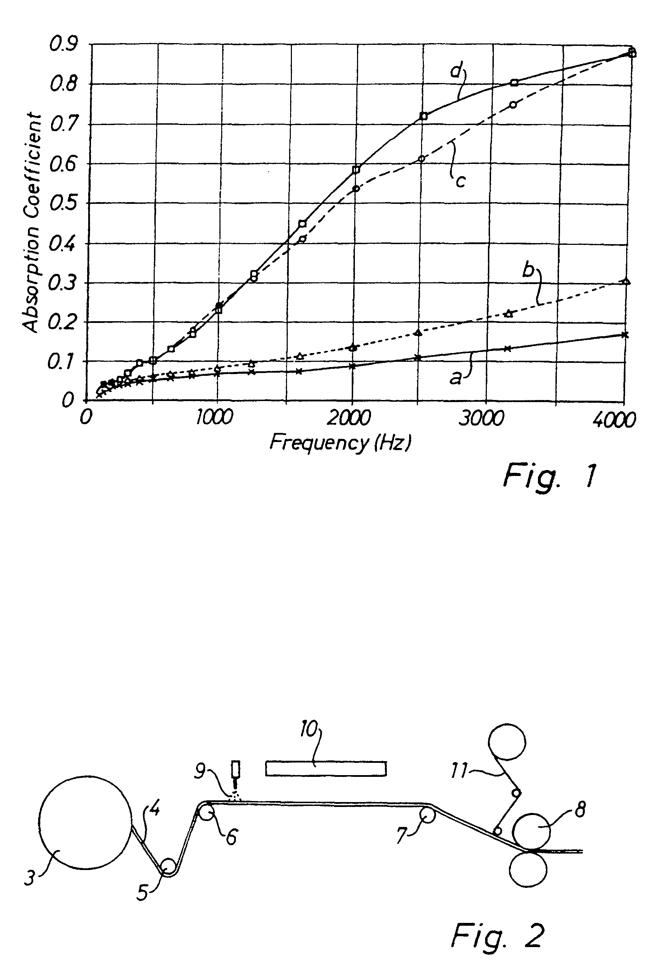

Die in Figur 1 dargestellten Schallabsorptionsmessungen verschiedener Dünnschichtlaminate machen die überraschend signifikante Verbesserung der Schallabsorption bei Verwendung von erfindungsgemässen Dünnschichtlaminaten deutlich. Der Verlauf der Kurve b zeigt die Frequenzabhängigkeit des Absorptionskoeffizienten für ein 9 mm dickes Laminat aus konventionellem Schaum und konventionellem Faservlies (Polypropylen, 17 g/m² (0.5 "osy" = ounce per square yard)). Dieser Absorptionskoeffizient α_{b} beträgt im Bereich tiefer Frequenzen, d.h. unterhalb 1000 Hz, weniger als 0.1 und nimmt im Bereich höherer Frequenzen im wesentlichen linear zu, d.h. zeigt bei Frequenzen von 2000 Hz einen Wert von 0.15 und im Bereich von 4000 Hz einen Wert von 0.3. Als Referenzmessung wurde der Absorptionskoeffizient αₐ eines unbeschichteten Schaums gleicher Dicke (9 mm) unter den gleichen Bedingungen ausgemessen. Der Verlauf dieses Absorptionskoeffizienten αₐ ist aus der Kurve a in Figur 1 ersichtlich. Die Werte des Absorptionskoeffizienten αₐ liegen etwa 30% unter den Werten des Absorptionskoeffizienten α_{b}. Der Verlauf des Absorptionskoeffizienten α_{c} eines erfindungsgemässen Dünnschichtlaminats ist aus Kurve c in Figur 1 ersichtlich. Dieses Dünnschichtlaminat weist bei einer Frequenz von 500 Hz bereits einen höheren Absorptionskoeffizienten α_{c} mit einem Wert von 0.1 auf. Der Wert dieses Absorptionskoeffizienten steigt gegen höhere Frequenzen mehr oder weniger linear bis auf 0.9 bei 4000 Hz. Versieht man das erfindungsgemässe Dünnschichtlaminat mit einem konventionellen Faservlies, so dass die Gesamtdicke des Bauteils 9.5 mm beträgt, verbessert sich der Schallabsorptionskoeffizient α_{d} dieses erweiterten Dünnschichtlaminats gegenüber dem Absorptionskoeffizienten α_{c} im Bereich von 1500 bis 3500 Hz um etwa 5% bis 10%.

Die überraschende Verbesserung des Absorptionskoeffizienten α_{c} kommt durch den erfindungsgemässen Aufbau des Dünnschichtlaminats zustande. Dieses umfasst in einer bevorzugten Ausführungsform einen konventionellen, 9 mm dicken, offenporigen Schaum mit einer Dichte von 16 kg/m³ und einem Gewicht von 15 g/ft² (166g/m²), respektive ein konventionelles, 9 mm dickes, offenporiges Faservlies mit einem Flächengewicht von weniger als 300 g/m². Auf diesem Schaum respektive Faservlies liegt eine 0.5 mm dicke Mikrofaserschicht aus schmelzgeblasenen Mikrofasern. Diese Fasern weisen einen Durchmesser im Bereich von 2 - 5 µm, insbesondere von 2 - 3 µm, auf und werden in der Regel aus Polypropylen gefertigt. Das für die Messung des Absorptionskoeffizienten α_{c} verwendete Dünnschichtlaminat weist 40 g/m² derartiger schmelzgeblasener Mikrofasern auf. Bei dem gemessenen Absorptionskoeffizienten α_{d} des Trilaminats ist die Mikrofaserschicht mit einer schützenden Faservliesschicht belegt, welche aus einem Gemisch aus Zellulosefasern (17 g/m² (1/2 osy)) und Polyesterfasern besteht (17 g/m²).

Figur 2 zeigt einen möglichen Verfahrensablauf für die kontinuierliche Herstellung des erfindungsgemässen Dünnschichtlaminats. Dabei wird von einer ersten Rolle 3 eine geeignete Bahn 4 aus einem Trägermaterial, bspw. aus Schaum oder einem Faservlies, abgezogen und über Umlenkrollen 5, 6, 7 zu einem Quetschrollenpaar 8 geführt. An einer Arbeitsstation I wird die abgezogene Bahn 4 mit einem Haftmittel 9, insbesondere einem Kontaktkleber, resp. einem vernetzenden PSA-Kleber (pressure-sensitive-adhesive) besprüht, welcher mit Hilfe eines IR-Strahlers 10 angetrocknet wird. Auf den derart vorbehandelten Bahn 4 wird eine aus schmelzgeblasenen Fasern gefertigte Bahn 11 aufgelegt. Die beiden Bahnen 4, 11 werden gemeinsam durch die Quetschrollen 8 geführt und miteinander verbunden. Mit den Quetschrollen 8 kann das Material der Bahn 4 gleichzeitig in gewünschter Weise verdichtet werden. Das derart laminierte Material wird anschliessend in Rohstücke geschnitten und einer Formpresse zugeführt. Es versteht sich, dass die erfindungsgemässen Dünnschichtlaminate auch aus vorgeschnittenen Materialstücken gefertigt sein können. In jedem Fall wird das Haftmittel 9 in sehr feiner Form aufgesprüht und wird darauf geachtet, dass die sich auf dem offenporigen Material der Bahn 4 ablagernden Tröpfchen nicht verlaufen, d.h. keinen geschlossenen Film bilden und/oder in die Poren des offenporigen Trägermaterials eindringen, damit sich beim anschliessenden Laminieren die einzelnen Poren des Trägermaterials nicht verschliessen.

Das derart hergestellte Dünnschichtlaminat weist also im wesentlichen eine dünne Trägerschicht, bspw. eine offenporige Schaumschicht aus einem ultraleichten Kunststoff-Schaum mit einer Dichte von weniger als 32 kg/m³, oder eine dünne Faservliesschicht mit einem Flächengewicht von weniger 2000 g/m² und einer Dicke von weniger als 50 mm auf, sowie eine damit verbundene Mikrofaserschicht aus schmelzgeblasenen Mikrofasern, deren Faserdurchmesser 1 bis 10 µm beträgt. Diese Mikrofaserschicht erzeugt einen Luftströmungswiderstand im Bereich von 500 < Rₜ < 4000 Ns/m³, insbesondere einen Luftströmungswiderstand im Bereich von 1000 < Rₜ < 3000 Ns/m³ und vorzugsweise einen Luftströmungswiderstand von etwa 1500 Ns/m³. In einer ersten Ausführungsform weist die ultraleichte Schaumschicht eine Dicke von mindestens 6 mm und ein Flächengewicht von etwa 100 bis 250 g/m² auf. Erfindungsgemäss weist die ultraleichte Schaumschicht eine Dicke von etwa 6 bis 15 mm, vorzugsweise 9 mm auf. Diese Schaumschicht ist vorzugsweise aus einem offenporigen Polyurethan-Schaum gefertigt und weist ein Flächengewicht von etwa 166 g/m² auf. In einer zweiten Ausführungsform besteht die Trägerschicht aus einer leichten Faservlies-Trägerschicht mit einer Dicke von etwa 6 bis 15 mm, vorzugsweise 9 mm. Diese Faservliesschicht ist vorzugsweise aus Baumwollfasern, synthetischen Fasern oder Mischfasern gefertigt. Bei diesen Ausführungsformen weist die Mikrofaserschicht eine Dicke von 0.2 bis 1.00 mm, insbesondere 0.3 bis 0.7 mm und ein Flächengewicht von 20 bis 200 g/m², insbesondere 30 bis 100 g/m² auf. Dabei bestehen die Mikrofasern dieser Mikrofaserschicht aus schmelzgeblasenem Polypropylen, Polyolefin, Polyester, Polyurethan oder Nylon und weisen diese Fasern einen Durchmesser von 2 bis 5 µm, insbesondere 2 bis 3 µm. Die Dicke der verwendeten Mikrofaserschicht beträgt vorzugsweise 0.3 bis 0.7 mm, insbesondere 0.3 bis 0.5 mm, und weist ein Flächengewicht von 35 bis 45 g/m², insbesondere von 40 g/m² auf. Das derart aufgebaute Dünnschichtlaminat weist einen Schallabsorptionskoeffizienten α auf, welcher bei 2000 Hz einen Wert von mehr als 0.4, insbesondere von mehr als 0.5 aufweist. Vorzugsweise werden die aufeinander laminierten Schichten mit Hilfe eines aufgesprühten Haftmittels miteinander verbunden. Als geeignete Haftmittel können vernetzende PSA-Kleber auf Wasserbasis betrachtet werden.

In einer Weiterbildung des erfindungsgemässen Dünnschichtlaminats ist auf die Mikrofaserschicht eine Faservliesdeckschicht aufgebracht. Diese Deckschicht kann aus einem Gemisch von Cellulosefasern und Polyesterfasern oder aus Polypropylenfasern gebildet sein. Vorteilhafterweise besteht diese Faservliesdeckschicht aus einem schmelzgeblasenen Gespinst, welches mit Ultraschall provisorisch gebunden ist. Diese schützende Deckschicht weist vorzugsweise ein Gewicht von 10 bis 25 g/m², insbesondere 17 g/m² auf. Dieses Faservlies kann eine Dicke von weniger als 1 mm aufweisen.

Es versteht sich, dass das erfindungsgemässe Dünnschichtlaminat als Verkleidungsteil ebenso gut im Automobilbau verwendet werden kann, wie im Maschinen- und Bauwesen. Insbesondere eignet es sich zur Verwendung als Fahrzeugtürabsorber, Dachhimmelverkleidung oder Gepäckablageverkleidung.

## Patentansprüche

1. Schallabsorbierendes Dünnschichtlaminat Mit mindestens einer offenporigen Trägerschicht und einer zweiten offenporigen Faserschicht, welche Trägerschicht entweder aus einer ersten Faserschicht, aus einem Faservlies mit einem Flächengewicht von weniger als 2000 g/m² und einer Dicke von weniger als 50 mm, oder aus einer offenporigen Schaumschicht, aus einem Kunststoff-Schaum mit einer Dichte von 16 bis 32 kg/m³ und einer Dicke von mindestens 6 mm besteht, **dadurch gekennzeichnet, dass** die zweite offenporige Faserschicht schmelzgeblasene Mikrofasern umfasst, deren Faserdurchmesser 1 bis 10 µm, insbesondere 2 bis 5 µm, beträgt und die Mikrofaserschicht eine Dicke von 0.2 bis 1.5 mm, insbesondere 0.3 bis 0.5 mm, und ein Flächengewicht von 20 bis 200 g/m², insbesondere von 35 bis 45 g/m², bevorzugterweise von 40 g/m² aufweist und dass das Dünnschichtlaminat einen Luftströmungswiderstand im Bereich von 500 < Rₜ < 4000 Ns/m³ aufweist.

2. Dünnschichtlaminat nach Anspruch 1, **dadurch gekennzeichnet, dass** die erste Faserschicht eine Faservliesschicht ist aus Naturfasern, insbesondere Baumwollfasern, Synthesefasern, Recyclingfasern oder eine Mischung aus Naturfasern, Synthesefasern oder Recyclingfasern.

3. Dünnschichtlaminat nach einem der Ansprüche 1 oder 2, **dadurch gekennzeichnet, dass** die Faservliesschicht Bindemittel aufweist, insbesondere aus Bikomponent-Fasern, thermoplastischen Fasern, thermoplastischen oder wärmehärtenden Harzen, oder aus einer Kombination aus denselben.

4. Dünnschichtlaminat nach Anspruch 1, **dadurch gekennzeichnet, dass** die Schaumschicht eine Dicke von 6 bis 15 mm, vorzugsweise 9 mm und ein Flächengewicht von 100 bis 250 g/m², vorzugsweise 166 g/m² aufweist.

5. Dünnschichtlaminat nach Anspruch 4, **dadurch gekennzeichnet, dass** die Schaumschicht aus einem offenporigen Polyurethan-Schaum besteht.

6. Dünnschichtlaminat nach einem der Ansprüche 1 bis 5, **dadurch gekennzeichnet, dass** die Mikrofaserschicht eine Dicke von 0.3 bis 0.7 mm und ein Flächengewicht von 30 bis 100 g/m² und eine Dichte von mehr als 50 kg/m³ aufweist.

7. Dünnschichtlaminat nach einem der Ansprüche 1 bis 6, **dadurch gekennzeichnet, dass** die Mikrofaserschicht einen Luftströmungswiderstand im Bereich von 500 < Rₜ < 3000 Ns/m³, insbesondere von etwa 1500 Ns/m³ erzeugt.

8. Dünnschichtlaminat nach einem der Ansprüche 1 bis 7, **dadurch gekennzeichnet, dass** die Mikrofasern der Faserschicht aus schmelzgeblasenem Polyolefin, Polypropylen, Polyester, Polyurethan oder Nylon gefertigt sind.

9. Dünnschichtlaminat nach einem der Ansprüche 1 bis 8, **dadurch gekennzeichnet, dass** der Faserdurchmesser der Mikrofasern etwa 3 µm beträgt.

10. Dünnschichtlaminat nach einem der Ansprüche 1 bis 9, **dadurch gekennzeichnet, dass** die Trägerschicht und die Mikrofaserschicht mit Hilfe eines aufgesprühten Haftmittels miteinander verbunden sind.

11. Dünnschichtlaminat nach Anspruch 10, **dadurch gekennzeichnet, dass** das aufgesprühte Haftmittel aus einem vernetzenden PSA Kleber auf Wasserbasis besteht.

12. Dünnschichtlaminat nach einem der Ansprüche 1 bis 11, **dadurch gekennzeichnet, dass** auf der Mikrofaserschicht eine Deckschicht aus Faservlies befestigt ist.

13. Dünnschichtlaminat nach Anspruch 12, **dadurch gekennzeichnet, dass** das Deckschicht-Faservlies aus einem Gemisch von Cellulosefasern und Polyesterfasern besteht.

14. Dünnschichtlaminat nach Anspruch 12, **dadurch gekennzeichnet, dass** das Deckschicht-Faservlies Polypropylenfasern umfasst.

15. Dünnschichtlaminat nach Anspruch 12, **dadurch gekennzeichnet, dass** das Deckschichtfaservlies ein ultraschallgebundenes, schmelzgeblasenes Gespinst ist.

16. Dünnschichtlaminat nach einem der Ansprüche 12 bis 15, **dadurch gekennzeichnet, dass** das Decksch ichtfaservlies ein Gewicht von 10 bis 25 g/m², insbesondere 17g/m² aufweist.

17. Dünnschichtlaminat nach einem der Ansprüche 12 bis 16, **dadurch gekennzeichnet, dass** das Deckschichtfaservlies eine Dicke von 0.5 bis 2.0 mm, vorzugsweise 1 mm, aufweist.

18. Verfahren zur Herstellung eines Dünnschichtlaminats gemäss Anspruch 1, **dadurch gekennzeichnet, dass** eine Mikrofaserschicht aus schmelzgeblasenen Mikrofasern, deren Durchmesser im Bereich von 1 bis 10 µm, und vorzugsweise zwischen 2 und 5 µm liegt, mit Hilfe eines aufgesprühten Klebers auf einer Trägerschicht befestigt wird, welche Trägerschicht antweder aus einem Faservlies mit einem Flächengewicht von weniger als 2000 g/m² und einer Dicke von weniger als 50 mm, oder aus einem offenporigen Kunststoffschaum mit einer Dichte von 16 bis 32 kg/m³ besteht.

19. Verfahren nach Anspruch 18, **dadurch gekennzeichnet, dass** das Dünnschichtlaminat mittels einer Druckund Wärmebehandlung in eine gewünschte Form gebracht wird.

20. Verwendung eines Dünnschichtlaminats gemäss Anspruch 1 für die Geräuschverminderung in Motorfahrzeugen, insbesondere im Zusammenhang mit Armaturenverkleidungen, Bodenbelägen, Türverkleidungen, Dachauskleidungen, Kofferraum- und/oder Motorraumverkleidungen.

## Claims

1. A sound-absorbing thin-layer laminate having at least an open-cell backing layer and a second open-cell fibre layer, which backing layer consists either of a first fibre layer, of a nonwoven with a weight per unit area of less than 2000 g/m² and a thickness of less than 50 mm, or of an open-cell foam layer, of a plastics foam with a density of 16 to 32 kg/m³ and a thickness of at least 6 mm, **characterised in that** the second open-cell fibre layer comprises melt-blown microfibres, the fibre diameter of which amounts to 1 to 10 µm, in particular 2 to 5 µm, and the microfibre layer has a thickness of from 0.2 to 1.5 mm, in particular 0.3 to 0.5 mm, and a weight per unit area of from 20 to 200 g/m², in particular 35 to 45 g/m², preferably 40 g/m², and **in that** the thin-layer laminate exhibits air flow resistance in the range of 500 < Rₜ < 4000 Ns/m³.

2. A thin-layer laminate according to claim 1, **characterised in that** the first fibre layer is a nonwoven layer of natural fibres, in particular cotton fibres, synthetic fibres, recycled fibres or a mixture of natural fibres, synthetic fibres or recycled fibres.

3. A thin-layer laminate according to one of claims 1 or 2, **characterised in that** the nonwoven layer comprises binders, in particular of bicomponent fibres, thermoplastic fibres, thermoplastic or hot curing resins, or a combination thereof.

4. A thin-layer laminate according to claim 1, **characterised in that** the foam layer exhibits a thickness of 6 to 15 mm, preferably 9 mm, and a weight per unit area of 100 to 250 g/m², preferably 166 g/m².

5. A thin-layer laminate according to claim 4, **characterised in that** the foam layer consists of an open-cell polyurethane foam.

6. A thin-layer laminate according to one of claims 1 to 5, **characterised in that** the microfibre layer has a thickness of from 0.3 to 0.7 mm and a weight per unit area of from 30 to 100 g/m² and a density greater than 50 kg/m³.

7. A thin-layer laminate according to one of claims 1 or 6, **characterised in that** the microfibre layer exhibits air flow resistance in the range of 500 < Rₜ < 3000 Ns/m³, in particular of approximately 1500 Ns/m³.

8. A thin-layer laminate according to one of claims 1 to 7, **characterised in that** the microfibres of the fibre layer are made from melt-blown polyolefin, polypropylene, polyester, polyurethane or nylon.

9. A thin-layer laminate according to one of claims 1 to 8, **characterised in that** the fibre diameter of the microfibres amounts to approximately 3 µm.

10. A thin-layer laminate according to one of claims 1 to 9, **characterised in that** the backing layer and the microfibre layer are bonded together by means of a spray-on adhesive agent.

11. A thin-layer laminate according to claim 10, **characterised in that** the spray-on adhesive agent consists of a water-based cross-linking pressure-sensitive adhesive.

12. A thin-layer laminate according to one of claims 1 to 11, **characterised in that** a nonwoven outer layer is attached to the microfibre layer.

13. A thin-layer laminate according to claim 12, **characterised in that** the nonwoven outer layer consists of a mixture of cellulose fibres and polyester fibres.

14. A thin-layer laminate according to claim 12, **characterised in that** the nonwoven outer layer comprises polypropylene fibres.

15. A thin-layer laminate according to claim 12, **characterised in that** the nonwoven outer layer is an ultrasonically bonded, melt-blown spun net.

16. A thin-layer laminate according to one of claims 12 to 15, **characterised in that** the nonwoven outer layer has a weight of 10 to 25 g/m², in particular 17 g/m².

17. A thin-layer laminate according to one of claims 12 to 16, **characterised in that** the nonwoven outer layer exhibits a thickness of from 0.5 to 2.0 mm, preferably 1 mm.

18. A process for producing a thin-layer laminate according to claim 1, **characterised in that** a microfibre layer of melt-blown microfibres, the diameter of which ranges from 1 to 10 µm, and preferably between 2 and 5 µm, is attached to a backing layer by means of a spray-on adhesive, which backing layer consists either of a nonwoven with a weight per unit area of less than 2000 g/m² and a thickness of less than 50 mm or of an open-cell plastics foam with a density of 16 to 32 kg/m³.

19. A process according to claim 18, **characterised in that** the thin-layer laminate is formed into the desired shape by means of treatment with pressure and heat.

20. Use of a thin-layer laminate according to claim 1 for noise-reduction in motor vehicles, in particular in the context of dashboard trim, floor coverings, door trim, roof liners, trunk and/or engine compartment liners.

## Revendications

1. Stratifié en couches minces à absorption phonique présentant au moins une couche de support à pores ouverts et une seconde couche de fibres à pores ouverts, ladite couche de support consistant soit en une première couche de fibres fabriquée à partir d'un non-tissé de fibres avec une masse au mètre carré inférieure à 2000 g/m² et une épaisseur inférieure à 50 mm, soit en une couche de mousse à pores ouverts fabriquée à partir d'une mousse en matière synthétique avec une densité allant de 16 à 32 kg/m³ et une épaisseur d'au moins 6 mm, **caractérisé en ce que** la seconde couche de fibres à pores ouverts comprend des microfibres soufflées par fusion dont le diamètre de fibre va de 1 à 10 µm, notamment de 2 à 5 µm et la couche de microfibres présente une épaisseur allant de 0,2 à 1,5 mm, notamment de 0,3 à 0,5 mm et une masse par mètre carré allant de 20 à 200 g/m², notamment de 35 à 45 g/m², étant de préférence de 40 g/m² et **en ce que** le stratifié en couches minces présente une résistance au passage de l'air située dans la plage de 500 < Rₜ < 4000 Ns/m³.

2. Stratifié en couches minces selon la revendication 1, **caractérisé en ce que** la première couche de fibres est une couche de non-tissé de fibres en fibres naturelles, notamment en fibres de coton, en fibres synthétiques, en fibres recyclées ou en un mélange de fibres naturelles, de fibres synthétiques ou de fibres recyclées.

3. Stratifié en couches minces selon l'une quelconque des revendications 1 ou 2, **caractérisé en ce que** la couche de non-tissé de fibres présente un liant, notamment en fibres à deux composants, en fibres thermoplastiques, en résines thermoplastiques ou thermodurcissables ou en une combinaison de celles-ci.

4. Stratifié en couches minces selon la revendication 1, **caractérise en ce que** la couche de mousse présente une épaisseur allant de 6 à 15 mm, de préférence de 9 mm et une masse au mètre carré allant de 100 à 230 g/m², étant de préférence de 165 g/m².

5. Stratifié en couches minces selon la revendication 4, **caractérisé en ce que** la couche de mousse consiste en une mousse polyuréthane à pores ouverts.

6. Stratifié en couches minces selon l'une quelconque des revendications 1 à 5, **caractérisé en ce que** la couche de microfibres présente une épaisseur allant de 0,3 à 0,7 mm, une masse au mètre carré allant de 30 à 100 g/m² et une densité supérieure à 50 kg/m³.

7. Stratifié en couches minces selon l'une quelconque des revendications 1 à 6, **caractérisé en ce que** la couche de microfibres engendre une résistance au passage de l'air située dans la plage de 500 < Rₜ < 3000 Ns/m³, étant notamment d'environ 1500 Ns/m³.

8. Stratifié en couches minces selon l'une quelconque des revendications 1 à 7, **caractérisé en ce que** les microfibres de la couche de fibres sont fabriquées à partir de polyoléfine soufflée à l'état fondu, de polypropylène, de polyester, de polyuréthane ou de nylon.

9. Stratifié en couches minces selon l'une quelconque des revendications 1 à 8, **caractérisé en ce que** le diamètre de fibre des microfibres est d'environ 3 µm.

10. Stratifié en couches minces selon l'une quelconque des revendications 1 à 9, **caractérisé en ce que** la couche de support et la couche de microfibres sont reliées entre elles à l'aide d'un agent adhésif appliqué par pulvérisation.

11. Stratifié en couches minces selon la revendication 10, **caractérisé en ce que** l'agent adhésif appliqué par pulvérisation consiste en une colle d'anydride phtalique réticulée à base d'eau.

12. Stratifié en couches minces selon l'une quelconque des revendications 1 à 11, **caractérisé en ce qu'**une couche extérieure de non-tissé de fibres est fixée à la couche de microfibres.

13. Stratifié en couches minces selon la revendication 12, **caractérisé en ce que** le non-tissé de fibres de la couche extérieure consiste en un mélange de fibres cellulosiques et de fibres en polyester.

14. Stratifié en couches minces selon la revendication 12, **caractérisé en ce que** le non-tissé de fibres de la couche extérieure comprend des fibres en polypropylène.

15. Stratifié en couches minces selon la revendication 12, **caractérisé en ce que** le non-tissé de fibres de la couche extérieure est un tissu soufflé à l'état fondu, lié par ultrasons.

16. Stratifié en couches minces selon l'une quelconque des revendications 12 à 15, **caractérisé en ce que** le non-tissé de fibres de la couche extérieure présente une masse allant de 10 à 25 g/m², étant notamment de 17 g/m².

17. Stratifié en couches minces selon l'une quelconque des revendications 12 à 16, **caractérisé en ce que** le non-tissé de fibres de la couche extérieure présente une épaisseur allant de 0,5 à 2,0 mm, étant de préférence de 1 mm.

18. Procédé de fabrication d'un stratifié en couches minces selon la revendication 1, **caractérisé en ce qu'**une couche de microfibres fabriquée à partir de microfibres soufflées à l'état fondu dont le diamètre va de 1 à 10 µm, et de préférence de 2 à 5 µm, est fixée à l'aide d'une colle appliquée par pulvérisation sur une couche de support, laquelle couche de support consiste soit en un non-tissé de fibres avec une masse au mètre carré inférieure à 2000 g/m² et une épaisseur inférieure à 50 mm soit en une mousse en matière synthétique à pores ouverts avec une densité allant de 16 à 32 kg/m³.

19. Procédé selon la revendication 18, **caractérisé en ce que** le stratifié en couches minces est amené sous une forme souhaitée à l'aide d'un traitement par pression et d'un traitement thermique.

20. Utilisation d'un stratifié en couches minces selon la revendication 1 pour réduire le bruit dans les véhicules à moteur, notamment pour ce qui est des revêtements de tableau de bord, des revêtements de sol, des revêtements de portières, des revêtements de toit, des revêtements de coffre et/ou du compartiment moteur.
